# EUROPÄISCHE PATENTSCHRIFT

(11) **EP 4 194 170 B1**
(45) Veröffentlichungstag und Bekanntmachung des Hinweises auf die Patenterteilung: **31.01.2024**
(21) Anmeldenummer: 21213398.7
(22) Anmeldetag: 09.12.2021
(51) Int. Cl.: B29B 17/02, B29B 17/00, C09J 161/00

(54) **VERFAHREN ZUM RECYCELN VON ANORGANISCHE PARTIKEL ENTHALTENDEM FORMALDEHYDHARZ, INSBESONDERE MELAMINHARZ, UND VERWENDUNG DES RECYCELTEN FORMALDEHYDHARZ**
PROCESS FOR RECYCLING FORMALDEHYDE RESIN CONTAINING INORGANIC PARTICLES, ESPECIALLY MELAMINE RESIN, AND USE OF THE RECYCLED FORMALDEHYDE RESIN
PROCÉDÉ DE RECYCLAGE DE LA RÉSINE DE FORMALDÉHYDE CONTENANT DES PARTICULES INORGANIQUES, EN PARTICULIER RÉSINE DE MÉLAMINE, ET UTILISATION DE LA RÉSINE DE FORMALDÉHYDE RECYCLÉE

(43) Veröffentlichungstag der Anmeldung: 14.06.2023
(73) Patentinhaber: SWISS KRONO Tec AG, 6004 Luzern (CH)
(72) Erfinder: KALWA, Norbert, 32805 Horn-Bad Meinberg (DE)
(74) Vertreter: Maikowski & Ninnemann Patentanwälte Partnerschaft mbB

(56) Entgegenhaltungen:
- WO-A1-2020/151949
- CN-A- 109 852 305

## Beschreibung

Die vorliegende Erfindung betrifft ein Verfahren zum Recyceln bzw. Aufarbeiten von Formaldehydharz, insbesondere Melaminharz, enthaltend anorganische Partikel, wobei das Formaldehyd-Harz insbesondere als Überschuss oder Abfall in einem Verfahren zum Beschichten von Holzwerkstoffplatten und zur Bereitstellung von Holzwerkstoffplatten mit abriebfesten Oberflächen anfällt. Die vorliegende Erfindung betrifft ebenfalls die Verwendung eines mit diesem Verfahren recycelten Formaldehydharzes.

### Beschreibung

In der Holzwerkstoffindustrie werden in großem Stil duroplastische Harze verarbeitet. Dies sind hauptsächlich Harnstoff-Formaldehyd-Harze und Melamin-Formaldehyd-Harze. In geringerem Masse Phenol-Formaldehyd-Harze. Bei der Verarbeitung von diesen duroplastischen Harzen in der fallen häufig prozessbedingt Harzabfälle an. Der Grund dafür ist, dass die Harze Hilfsstoffe wie Härter, mineralische Bestandteile enthalten, die eine Aushärtung der Harze katalysieren. Mineralische Bestandteile wie Korund (Aluminiumoxid), werden den Rezepturen zugeben um die Verschleißfestigkeit oder Kratzfestigkeit von Melaminharzoberflächen zu steigern, was insbesondere bei Fußbodenanwendungen essentiell ist. Da der Laminatbodenmarkt sich mittlerweile zu einem Massenmarkt mit einer Produktionsmenge von ca. 1 Mrd. m² pro Jahr entwickelt hat, ist dies auch mengenmäßig ein Problem.

Diese langsam ablaufende Aushärtung führt zu einer Veränderung der Viskosität und damit zu Verarbeitungsproblemen wegen schlechter Benetzung, schlechter Penetration usw. und damit auch zu Qualitätsproblemen. Es können z. B. durch qualitativ nicht mehr einwandfreie Harze bei der Imprägnierung von Dekorpapieren oder beim Auftrag dieser Harze auf bedruckte Platten nach dem Verpressen Transparenzstörungen oder Farbveränderungen auftreten. Dies ist insbesondere bei Melaminharzen problematisch, da diese Harze sehr teuer sind und die Viskositätsänderung vom Produktionspersonal genau beobachtet werden und Harzwechsel möglicherweise auch häufiger als nötig durchgeführt werden. Dies führt zu Harzverlusten, die sich durchaus im Bereich von 10 bis 15% bewegen können. Damit entsteht nicht nur ein Kosten- sondern auch ein Entsorgungsproblem. Zudem ist der zu entsorgende Abfall häufig ein Gemisch aus Harz und anorganischen Partikeln, was die Entsorgung verteuert und problematisch macht.

Daraus ergeben sich verschiedene Nachteile: eine teure Entsorgung ist erforderlich, hoher Mengenanfall, ökologisch problematisch. Insgesamt entstehen hohe Zusatzkosten. Aus dem Dokument WO2020/151949 A1 ist ein Verfahren bekannt, in dem abriebfeste Formaldehydhaltige Holzwerkstoffplatten hergestellt werden. Bei dem Verfahren werden abriebfeste Partikel auf die Holzwerkstoffplatte aufgestreut. Innerhalb des Produktionsprozesses werden überschüssige abriebfeste Partikel wiederverwertet. Hierzu werden verklumpte Partikel und verklumptes Formaldehyd-Harz von noch verwendbaren abriebfesten Partikeln getrennt. Aus der CN109 852 305 A ist ein Verfharen zum Recyceln von Formaldehydharz bekannt. Das Verfahren umfasst das Neutralisieren des recycelten Harzes und die Zugabe zu einem nicht vorkondensierten Formaldehyd-Harz. Dieses Verfahren wird jedoch auf reines Formaldehydharz angewendet, weshalb weder eine mechanische Abtrennung noch eine Anwendung auf anorganische Partikel enthaltende Harze offenbart wird.

Der vorliegenden Erfindung liegt daher die technische Aufgabe zu Grunde die Entsorgung des Melaminharzes zu vermeiden und die anfallenden Abfälle einer neuen Nutzung zu zuführen. Dabei sollte es sich um ein echtes Recycling handeln und nicht um eine verkappte Entsorgung. Diese Aufgabe wird durch ein Verfahren mit den Merkmalen des Anspruchs 1 gelöst.

Entsprechend wird ein Verfahren zum Recyceln bzw. Aufarbeiten von Formaldehydharz, insbesondere Melaminharz, enthaltend anorganische Partikel bereitgestellt. Das zu recycelnde Formaldehyd-Harz fällt insbesondere als Überschuss oder Abfall in einem Verfahren zum Beschichten von Holzwerkstoffplatten und zur Bereitstellung von Holzwerkstoffplatten mit abriebfesten Oberflächen an.

Das vorliegende Verfahren umfasst die folgenden Schritte:
- mechanisches Abtrennen der anorganischen Partikel von dem zu recycelnden Formaldehyd-Harz;
- Einstellen des pH-Wertes des recycelten, von den anorganischen Partikeln befreiten Formaldehyd-Harzes auf einen Wert zwischen 7 und 8, bevorzugt zwischen 7,3 und 7,8, insbesondere bevorzugt 7,5; und
- Zugabe des recycelten Formaldehyd-Harzes zu einem nicht vorkondensierten Formaldehyd-Harz.

Es wird somit ein Verfahren zur Aufarbeitung von Formaldehydharz bereitgestellt, welches bereits in einen Verarbeitungsprozess zur Herstellung und Vergütung von Holzwerkstoffplatten eingeführt worden ist. Insbesondere wird ein Formaldehydharz aufgearbeitet, welches zur Beschichtung und Vergütung von Holzwerkstoffplatten verwendet wurde, wie z.B. in der WO2020/151949 A1 beschrieben. Das in einem solchen Beschichtungsverfahren als Überschuss oder Abfall anfallende Formaldehydharz weist u.a. Korundpartikel, Glaskugeln aber auch eine bestimmte Menge an Härter auf. Bei dem zu recycelnden Harz handelt es sich somit um ein Harz, welches als nicht mehr einwandfrei verarbeitbar eingestuft ist. Das mit dem vorliegenden Verfahren aufgearbeitete Formaldehydharz ist insbesondere für Anwendungen im nicht-dekorativen Bereich von Holzwerkstoffplatten geeignet.

Gemäß dem vorliegenden Verfahren wird das zu recycelnde Harz zunächst von den mineralischen Bestandteilen befreit und dann auf einen neutralen pH-Wert eingestellt. Die Abtrennung der mineralischen Bestandteile erfolgt durch Absieben mit Hilfe eines Schrägsiebes, das an die Maschenweite der mineralischen Bestandteile (Korund, Glashohlkugeln) angepasst ist. Es hatte sich nämlich überraschender Weise gezeigt, dass ein Absieben beider Arten von mineralischen Bestandteilen trotz erheblicher Korngrößenunterschiede (Korund: 50 bis 90 µm, Glashohlkugeln: 90 bis 110 µm) mit einem Sieb möglich ist. Dabei können Siebe mit Maschenweiten zwischen 150 und 200 µm eingesetzt werden. Wie sich zeigte können > 95% der mineralischen Bestandteile sicher abgetrennt werden. Das Schrägsieb kann nach jedem Abtrennvorgang nochmals mit Wasser gespült werden, um Reste des Harzes von den mineralischen Bestandteilen abzutrennen und um die mineralischen Bestandteile vom Sieb herunter zu spülen. Auch die mineralischen Bestandteile können nach Trocknung wieder verwendet werden. Sie können - je nachdem wie sie anfallen - selbst als Gemisch von Korund und Glaskugeln in einem Streuer eingesetzt werden. Auch der Einsatz in Flüssigrezepturen ist möglich.

Danach wird nach Prüfung der Viskosität und der zur Verfügung stehenden Menge entschieden, welcher Nutzung das Harz zugeführt wird. Dabei kommen folgende Nutzungswege zur Anwendung. Bei einem Harz, das von der Viskosität nur wenig über der Spezifikation liegt, wird eine Nutzung als Zusatz zu einem Melaminharz für Gegenzüge festgelegt. Dies kann sich um Gegenzüge auf Papierbasis oder um Flüssiggegenzüge handeln, die direkt auf die Platten Rückseite aufgetragen werden. Bei Melaminharzen, die bezüglich der Viskosität deutlich über der Spezifikation liegen, wird eine Verwendung als Leimzusatz bei der Produktion von Holzfaserplatten mit erhöhter Wasserbeständigkeit favorisiert. Dies gilt auch für Melaminharze, die z. B. wegen ihres Einsatzes als Rückseitenharz eingefärbt worden sind. Auch sie können bei der Herstellung von Faserplatten eingesetzt werden, da die Farbe auf Grund der geringen zugegebenen Harzmenge kein Problem darstellt.

Mit dem vorliegenden Verfahren kann eine deutliche Reduzierung von Entsorgungskosten, Kostenreduzierung durch weniger Abfall und eine verbesserte Ökobilanz erreicht werden.

In einer Ausführungsform des vorliegenden Verfahrens beträgt die Verarbeitungsviskosität des Formaldehyd-Harzes vor der Aufarbeitung, insbesondere vor der Abtrennung der anorganischen Partikel, zwischen 35 und 55 Sekunden, bevorzugt zwischen 40-50 Sekunden (DIN-Becher 4 mm, DIN EN ISO 2431: 1996-05 ).

In einer weiteren Ausführungsform des vorliegenden Verfahrens beträgt der pH-Wert des Formaldehyd-Harzes vor der Aufarbeitung zwischen 5 und 6. Die Reduzierung des pH-Wertes des Formaldehydharzes ist insbesondere durch die Zugabe von säurehaltigen Härtern während der Anwendung des Formaldehyd-Harzes zur Beschichtung und Vergütung von Holzwerkstoffplatten bedingt. Typische in Formaldehyd-Harzen verwendete Härter können latente Härter wie Alkanolaminsalze von Säuren, z.B. ein Alkanolaminsalz einer Sulfonsäure (siehe DeuroCure des Herstellers Deurowood) sein. Der Anteil des Härters in den einzelnen Harzschichten kann zwischen 0,5 bis 1,5 Gew%, bevorzugt 0,7 bis 1,3 Gew% betragen.

Wie beschrieben, werden die anorganischen Partikel in mechanischer Weise vom Formaldehyd-Harz abgetrennt. Bevorzugt erfolgt diese Abtrennung der anorganischen Partikel bzw. mineralischen Bestandteile von dem zu recycelnden Formaldehyd-Harz mittels Sieben.

Zum Absieben wird bevorzugt ein Sieb, z.B. ein Schrägsieb mit einer Maschenweite zwischen 120 und 250 µm, bevorzugt zwischen 150 und 200 µm verwendet. Die Maschenweite des verwendeten Siebes kann demnach mehr als doppelt so groß sein, wie die abgetrennten anorganischen Partikel. Dies hat den Vorteil, dass der Siebvorgang relativ schnell durchführbar ist. Zudem treten deutlich seltener Verstopfungen des Siebes auf. Auch kann auf ein Anlegen von Druck oder ähnlichem für den Siebvorgang verzichtet werden.

In einer Ausführungsform des vorliegenden Verfahrens werden die abgetrennten anorganischen Partikel gewaschen und getrocknet. Auf diese Weise ist eine erneute Verwendung der anorganischen Partikel zur Vergütung von Holzwerkstoffplatten möglich. So können die abgetrennten, recycelten anorganischen Partikel in abriebfesten Oberflächenbeschichtungen von Holzwerkstoffplatten verwendet werden. Z.B. werden die recycelten anorganischen Partikel in einem Beschichtungsverfahren, wie in WO 2017/198474A1 oder WO2020/151949 A1 beschrieben, auf harzbeschichtete Oberflächen aufgestreut.

In einer bevorzugten Ausführungsform des vorliegenden Verfahrens sind die anorganischen Partikel abriebfeste Partikel.

In einer weiteren Ausführungsform des vorliegenden Verfahrens werden als abriebfeste Partikel, Partikel aus Korund (Aluminiumoxide), Borcarbide, Siliziumdioxide, Siliziumcarbide verwendet. Besonders bevorzugt sind Korundpartikel. Dabei handelt es sich in bevorzugter Weise um Edelkorund (weiß) mit einer hohen Transparenz, damit die optische Wirkung des darunterliegenden Dekors so wenig wie möglich nachteilig beeinflusst wird. Korund weist eine ungleichmäßige Raumform auf.

Die Korngröße der verwendeten abriebfesten Partikel liegt in einem Bereich zwischen 30-90 µm, bevorzugt zwischen 50-90 µm.

Es werden abriebfeste Partikel mit Körnungen in den Klassen F180 bis F240, bevorzugt F200 verwendet. Die Korngröße der Klasse F180 umfasst einen Bereich von 53 - 90 µm, F220 von 45-75 µm, F230 34-82 µm, F240 28-70 µm (FEPA Norm). In einer Variante werden als abriebfeste Partikel Edelkorund weiß F180 bis F240, bevorzugt in einem Hauptkornbereich von 53-90 µm verwendet. In einer besonders bevorzugten Ausführungsform werden Korundpartikel der Klasse F200 verwendet, wobei F200 eine Mischung zwischen F180 und F220 ist und einen Durchmesser zwischen 53 und 75 µm aufweist.

In einer weitergehenden Ausführungsform können silanisierte Korundpartikel verwendet werden. Typische Silanisierungsmittel sind Aminosilane.

Die Menge an abriebfesten Partikeln im zu recycelnden Harz beträgt 10 bis 30 Gew% , bevorzugt 15 bis 25 Gew% , insbesondere bevorzugt 17 bis 23 Gew% . Die Menge der abriebfesten Partikel im zu recycelnden Harz hängt insbesondere von deren Verwendung in Harzen ab, die als Verschleißschichten auf Holzwerkstoffplatten verwendet werden, und hier insbesondere von der zu erreichenden Abriebklasse und der Korngröße ab. So liegt die Menge an abriebfesten Partikeln im Falle der Abriebklasse AC3 im Bereich zwischen 10 bis 15 g/m², in der Abriebklasse AC4 zwischen 15 bis 20 g/m² und in der Abriebklasse AC5 zwischen 20 bis 25 g/m² bei Verwendung der Körnung F200. Im vorliegenden Fall weisen die fertigen Platten bevorzugt die Abriebklasse AC4 auf.

In einer weiteren bevorzugten Ausführungsform des vorliegenden Verfahrens sind die anorganischen Partikel abriebfeste Partikel Glaskugeln.

Es ist bevorzugt, wenn die verwendeten Glaskugeln eine Mohshärte von mindestens 7 und einen Durchmesser von 50 bis 150 µm, bevorzugt von 80 bis 120 µm, insbesondere bevorzugt von 90 bis 110 µm aufweisen. Die Glaskugeln sind bevorzugt schneidkantenfrei und kugelförmig.

Die Menge an Glaskugeln im zu recycelnden Harz beträgt zwischen 10 bis 30 Gew%, bevorzugt 15 bis 25 Gew% g/m², insbesondere bevorzugt 17 bis 23 Gew%. Die Menge der Galskugeln im zu recycelnden Harz hängt ebenfalls insbesondere von deren Verwendung in Harzen ab, die als Verschleißschichten auf Holzwerkstoffplatten verwendet werden.

Die Glaskugeln können (müssen aber nicht) in silanisierter Form vorliegen. Durch die Silanisierung der Glasperlen wird die Einbettung der Glasperlen in die Harzmatrix.

In einer weiteren Ausführungsform des vorliegenden Verfahrens wird nach Abtrennen der anorganischen Partikel der pH-Wertes des recycelten Formaldehyd-Harzes auf einen Wert zwischen 7 und 8, bevorzugt zwischen 7,3 und 7,8, insbesondere bevorzugt 7,5 eingestellt. Hierdurch wird eine vorzeitige Kondensation aufgearbeiteten bzw. von anorganischen Partikeln befreiten Harzes verhindert.

In einer Ausführungsform des vorliegenden Verfahrens ist die Verarbeitungsviskosität des recycelten Harzes nach der Aufarbeitung zwischen 1 bis 5 Sekunden gegenüber der Verarbeitungsviskosität des Harzes vor der Aufarbeitung reduziert.

Wie bereits erwähnt, kann das recycelte, von den anorganischen Partikeln befreite Formaldehydharz in verschiedener Weise wiederverwendet werden. Insbesondere erfolgt die Wiederverwendung als Zumischung zu einem (frischen) Formaldehydharz. Diese Mischung aus recycelten Formaldehyd-Harz und nicht-vorkondensierten Formaldehyd-Harz kann bevorzugt für nicht-dekorative Anwendungen, insbesondere als Bindemittel für Holzwerkstoffplatten oder als Flüssigbeschichtung von Holzwerkstoffplatten, verwendet werden.

In einer Variante wird eine Mischung aus recycelten Formaldehyd-Harz und nicht-vorkondensierten Formaldehyd-Harz der Unterseite von Holzwerkstoffplatte als Gegenzug verwendet. In diesem Falle werden zur Verwendung als Beschichtungsmittel bis zu 50 Gew%, bevorzugt bis zu 30 Gew%, insbesondere bevorzugt bis zu 10 Gew% an recycelten Formaldehyd-Harz zu dem nicht-vorkondensierten Formaldehyd-Harz zugegeben.

In einer anderen Variante wird eine Mischung aus recycelten Formaldehyd-Harz und nicht-vorkondensierten Formaldehyd-Harz als Bindemittel zur Herstellung von Holzwerkstoffplatten, insbesondere MDF- oder HDF-Platten verwendet. In diesem Falle zur Verwendung als Bindemittel werden bis zu 20 Gew%, bevorzugt bis zu 10 Gew%, insbesondere bevorzugt bis zu 5 Gew%, noch bevorzugter bis zu 3 Gew% an recycelten Formaldehyd-Harz zu dem nicht-vorkondensierten Formaldehyd-Harz, insbesondere einem Harnstoff-Formaldehyd-Harz, zugegeben.

Das beschriebene Verfahren kann selbstverständlich auch bei anderen duroplastischen Harzen eingestzt werden. Auch dort ist eine Zumischung von höherviskosen Harzen zu den niederviskosen Harzen in bestimmten Grössenordnungen möglich. Dabei können zuvor auch andere partikelförmigen Hilfsstoffe (z. B.: Titandioxid, Fabpigmente, Kohlefasern usw. ) durch Absieben abgetrennt werden. Dabei kann als Auswahlkriterium für die Maschenweite des Siebes die doppelte Partikelgrösse angenommen werden.

Die vorliegende Erfindung wird im Folgenden anhand von Ausführungsbeispielen näher erläutert.

### Ausführungsbeispiel 1:

Ein korundhaltiges Melaminharz, das durch einen Stillstand von einer Verarbeitungsviskosität (DIN-Becher: 4 mm) von 34 Sekunden auf 41 Sekunden angestiegen war, wurde über ein Schrägsieb (Maschenweite 200 µm) von den mineralischen Bestandteilen befreit. Das Korund hatte eine Korngrösse von F 200 gemäß FEPA-Standard. Die abgesiebten Korundpartikel wurden mit Wasser gewaschen und getrocknet. Danach wurde der pH-Wert auf 7,5 eingestellt. Eine erneute Viskositätsmessung mit dem DIN-Becher ergab einen Wert von 40 Sekunden.

Das Harz wurde anschließend in einer Menge von 10 Gew% einem Melaminharz, das zur Flüssigbeschichtung (Flüssiggegenzug) einer HDF-Rückseite vorgesehen war, zugemischt. Das Harz wurde zusammen mit dem auf der Oberseite der HDF befindlichen Melaminharz in einem Umlufttrockner getrocknet und dann in einer Kurztaktpresse zu einem Laminatboden verpresst. Im Vergleich zu einer Platte ohne einen Anteil recycliertem Melaminharz, war kein Unterschied im Zugverhalten feststellbar. Auch andere Auffälligkeiten waren nicht zu beobachten.

### Ausführungsbeispiel 2:

Ein korund- und glaskugelhaltiges Melaminharz, das durch einen Stillstand an einer Produktionslinie von einer Verarbeitungsviskosität (DIN-Becher: 4 mm) von 34 Sekunden auf 46 Sekunden angestiegen war, wurde über ein Schrägsieb (Maschenweite 200 µm) von den mineralischen Bestandteilen befreit. Das Korund hatte eine Korngröße von F 200 gemäß FEPA-Standard, Die Glaskugeln lagen im Größenbereich von 90 bis 110 µm. Danach wurde der pH-Wert auf 7,5 eingestellt. Eine erneute Viskositätsmessung mit dem DIN-Becher ergab einen Wert von 45 Sekunden.

Das Harz wurde anschließend in der Blow-Line einer MDF-Linie dem mit Harnstoff-Formaldehyd-Leim zur Herstellung von quellreduzierten HDF zugesetzt. Dabei wurde mit der Dosierung eine Menge Melaminharz von 3 Gew% bezogen auf den Harnstoff-Formaldehyd-Leim erreicht. An den HDF wurde dann die Querzugfestigkeit und die Quellung geprüft. Die Werte (Querzugfestigkeit: 1,8 N/mm²; DIN EN 319, Quellung (24h): 8 %; DIN EN 317) erreichten das gleiche Niveau wie das, dass bei der Verwendung eines mit 3 Gew% Melamin verstärkten Leim erreicht werden.

### Ausführungsbeispiel 3:

Die im Ausführungsbeispiel 1 gewonnen Korundpartikel wurden in einer Flüssiglinie in eine bedruckte HDF, die mit einem flüssigen Melaminharz in einer Menge von 50 g/m² (Feststoffgehalt: 55 Gew%) beschichtet war, durch einen Streuer in einer Menge von 18 g/m² eingestreut. Das Melaminharz enthielt die üblichen Hilfsstoffe.

Nach Zwischentrocknung in einem Umlufttrockner wurden auf der Ober- und Unterseite der HDF mehrere Harzstriche mit Zwischentrocknung aufgebracht. Sie summierten sich auf den beiden Seiten auf ca. 80 g Melaminharz (fest)/m². Die Platte wurde in einer Kurztaktpresse bei 200°C Presstemperatur, 45 kg/cm² Pressdruck und 16 Sekunden Presszeit verpresst. Anschließend wurde das Verhalten gegenüber Abrieb-beanspruchung geprüft (DIN EN 13329, 2018-08). Es ergab sich ein Wert von 4200 Um. Dies entspricht dem Wert, der sich mit nicht recyceltem Korund bei dieser Auftragsmenge ergeben würde.

## Patentansprüche

1. Verfahren zum Recyceln von Formaldehydharz, insbesondere Melaminharz, enthaltend anorganische Partikel, umfassend die folgenden Schritte:
- mechanisches Abtrennen der anorganischen Partikel von dem zu recycelnden Formaldehyd-Harz;
- Einstellen des pH-Wertes des recycelten, von den anorganischen Partikeln befreiten Formaldehyd-Harzes auf einen Wert zwischen 7 und 8, bevorzugt zwischen 7,3 und 7,8, insbesondere bevorzugt 7,5; und
- Zugabe des recycelten Formaldehyd-Harzes zu einem nicht vorkondensierten Formaldehyd-Harz.

2. Verfahren nach Anspruch 1, **dadurch gekennzeichnet, dass** die Verarbeitungsviskosität des Formaldehyd-Harzes vor der Aufarbeitung, insbesondere vor der Abtrennung der anorganischen Partikel, zwischen 35 und 55 Sekunden, bevorzugt zwischen 40-50 Sekunden beträgt, wobei die Verarbeitungsviskosität nach DIN EN ISO 2431:1996-05 unter Verwendung eines DIN-Becher 4 mm erfassbar ist.

3. Verfahren nach einem der vorhergehenden Ansprüche, **dadurch gekennzeichnet, dass** der pH-Wert des Harzes vor der Aufarbeitung zwischen 5 und 6 beträgt.

4. Verfahren nach einem der vorhergehenden Ansprüche, **dadurch gekennzeichnet, dass** die anorganischen Partikel mittels Sieben von dem zu recycelnden Formaldehyd-Harz abgetrennt werden.

5. Verfahren nach Anspruch 4, **dadurch gekennzeichnet, dass** das Absieben durch Verwendung eines Schrägsiebes mit einer Maschenweite zwischen 120 und 250 µm, bevorzugt zwischen 150 und 200 µm erfolgt.

6. Verfahren nach einem der vorhergehenden Ansprüche, **dadurch gekennzeichnet, dass** die abgetrennten anorganischen Partikel gewaschen und getrocknet werden.

7. Verfahren nach einem der vorhergehenden Ansprüche, **dadurch gekennzeichnet, dass** die anorganischen Partikel abriebfeste Partikel, insbesondere Korundpartikel, sind.

8. Verfahren nach Anspruch 7, **dadurch gekennzeichnet, dass** die Korngröße der abgetrennten abriebfesten Partikel in einem Bereich zwischen 30-90 µm, bevorzugt zwischen 50-90 µm liegt.

9. Verfahren nach einem der Ansprüche 1-6, **dadurch gekennzeichnet, dass** die anorganischen Partikel Glaskugeln sind.

10. Verfahren nach Anspruch 9, **dadurch gekennzeichnet, dass** die Glaskugeln eine einen Durchmesser von 50 bis 150 µm, bevorzugt von 80 bis 120 µm, insbesondere bevorzugt von 90 bis 110 µm aufweisen.

11. Verfahren nach einem der vorhergehenden Ansprüche, **dadurch gekennzeichnet, dass** nach Abtrennen der anorganischen Partikel der pH-Wertes des recycelten Formaldehyd-Harzes auf einen Wert zwischen 7 und 8, bevorzugt zwischen 7,3 und 7,8, insbesondere bevorzugt 7,5 eingestellt wird.

12. Verfahren nach einem der vorhergehenden Ansprüche, **dadurch gekennzeichnet, dass** die Verarbeitungsviskosität des recycelten Harzes nach der Aufarbeitung zwischen 1 bis 5 Sekunden reduziert ist gegenüber der Verarbeitungsviskosität des Harzes vor der Aufarbeitung.

13. Verfahren nach einem der vorhergehenden Ansprüche **gekennzeichnet durch** die Zugabe des recycelten Formaldehyd-Harzes zu einem nicht-vorkondensierten Formaldehyd-Harz zur Verwendung als Flüssigbeschichtung für Holzwerkstoffpatten, insbesondere als Gegenzugbeschichtung von Holzwerkstoffplatten.

14. Verfahren nach einem der Ansprüche 1-12 **gekennzeichnet durch** die Zugabe des recycelten Formaldehyd-Harzes zu einem nicht-vorkondensierten Formaldehyd-Harz zur Verwendung als Bindemittel zur Herstellung von Holzwerkstoffplatten, insbesondere MDF- oder HDF-Platten.

## Claims

1. Process for recycling formaldehyde resin, in particular melamine resin, containing inorganic particles,
comprising the following steps:
- mechanical separation of the inorganic particles from the formaldehyde resin to be recycled;
- adjusting the pH of the recycled formaldehyde resin freed from the inorganic particles to a value between 7 and 8, preferably between 7.3 and 7.8, more preferably 7.5; and
- adding the recycled formaldehyde resin to a non-precondensed formaldehyde resin.

2. Process according to claim 1, **characterized in that** the processing viscosity of the formaldehyde resin before work-up, in particular before separation of the inorganic particles, is between 35 and 55 seconds, preferably between 40-50 seconds, the processing viscosity being detectable according to DIN EN ISO 2431: 1996-05 using a DIN cup 4 mm.

3. Process according to one of the preceding claims, **characterized in that** the pH of the resin before work-up is between 5 and 6.

4. Process according to one of the preceding claims, **characterized in that** the inorganic particles are separated from the formaldehyde resin to be recycled by means of sieves.

5. Process according to claim 4, **characterized in that** the sieving is carried out by using an inclined sieve with a mesh size between 120 and 250 µm, preferably between 150 and 200 µm.

6. Process according to one of the preceding claims, **characterized in that** the separated inorganic particles are washed and dried.

7. Process according to one of the preceding claims, **characterized in that** the inorganic particles are abrasion-resistant particles, in particular corundum particles.

8. Process according to claim 7, **characterized in that** the grain size of the separated abrasion-resistant particles is in a range between 30-90 µm, preferably between 50-90 µm.

9. Process according to one of claims 1-6, **characterized in that** the inorganic particles are glass spheres.

10. Process according to claim 9, **characterized in that** the glass spheres have a diameter of from 50 to 150 µm, preferably from 80 to 120 µm, more preferably from 90 to 110 µm.

11. Process according to one of the preceding claims, **characterized in that**, after separation of the inorganic particles, the pH of the recycled formaldehyde resin is adjusted to a value between 7 and 8, preferably between 7.3 and 7.8, more preferably 7.5.

12. Process according to one of the preceding claims, **characterized in that** the processing viscosity of the recycled resin after work-up is reduced between 1 to 5 seconds compared to the processing viscosity of the resin before work-up.

13. Process according to one of the preceding claims, **characterized by** adding the recycled formaldehyde resin to a non-precondensed formaldehyde resin for use as a liquid coating for wood-based panels, in particular as a backing coating for wood-based panels.

14. Process according to one of claims 1-12, **characterized by** adding the recycled formaldehyde resin to a non-precondensed formaldehyde resin for use as a binder for the production of wood-based panels, in particular MDF or HDF panels.

## Revendications

1. Procédé de recyclage de résine de formaldéhyde, en particulier résine de mélamine, contenant des particules inorganiques,
comprenant les étapes suivantes :
- la séparation mécanique des particules inorganiques de la résine de formaldéhyde à recycler ;
- l'ajustement de la valeur de pH de la résine de formaldéhyde recyclée, exempte des particules inorganiques à une valeur entre 7 et 8, de préférence entre 7,3 et 7,8, en particulier de préférence à 7,5 ; et
- l'ajout de la résine de formaldéhyde recyclée à une résine de formaldéhyde non-précondensée.

2. Procédé selon la revendication 1, **caractérisé en ce que** la viscosité de traitement de la résine de formaldéhyde avant le retraitement, en particulier avant la séparation des particules inorganiques, s'élève entre 35 et 55 secondes, de préférence entre 40 et 50 secondes, dans lequel la viscosité de traitement peut être détectée selon DIN EN ISO 2431:1996-05 en utilisant une coupe DIN de 4 mm.

3. Procédé selon l'une des revendications précédentes, **caractérisé en ce que** la valeur de pH de la résine s'élève avant le retraitement entre 5 et 6.

4. Procédé selon l'une des revendications précédentes, **caractérisé en ce que** les particules inorganiques sont séparées par tamisage de la résine de formaldéhyde à recycler.

5. Procédé selon la revendication 4, **caractérisé en ce que** le tamisage est effectué par utilisation d'un tamis incliné avec une ouverture de maille entre 120 et 250 µm, de préférence entre 150 et 200 µm.

6. Procédé selon l'une des revendications précédentes, **caractérisé en ce que** les particules inorganiques séparées sont lavées et séchées.

7. Procédé selon l'une des revendications précédentes, **caractérisé en ce que** les particules inorganiques sont des particules résistantes à l'abrasion, en particulier des particules de corindon.

8. Procédé selon la revendication 7, **caractérisé en ce que** la grosseur de grain des particules résistantes à l'abrasion séparées se trouve dans une plage entre 30 et 90 µm, de préférence entre 50-90 µm.

9. Procédé selon l'une des revendications 1-6, **caractérisé en ce que** les particules inorganiques sont des billes de verre.

10. Procédé selon la revendication 9, **caractérisé en ce que** les billes de verre présentent un diamètre de 50 à 150 µm, de préférence de 80 à 120 µm, en particulier de préférence de 90 à 110 µm.

11. Procédé selon l'une des revendications précédentes, **caractérisé en ce qu'**après la séparation des particules inorganiques, la valeur de pH de la résine de formaldéhyde recyclée est ajustée à une valeur entre 7 et 8, de préférence entre 7,3 et 7,8, en particulier de préférence à 7,5.

12. Procédé selon l'une des revendications précédentes, **caractérisé en ce que** la viscosité de traitement de la résine recyclée est réduite après le retraitement entre 1 à 5 secondes par rapport à la viscosité de traitement de la résine avant le retraitement.

13. Procédé selon l'une des revendications précédentes, **caractérisé par** l'ajout de la résine de formaldéhyde recyclée à une résine de formaldéhyde non-précondensée pour l'utilisation en tant que revêtement liquide pour des plaques de matériau dérivé du bois, en particulier entant que revêtement à contre-traction de plaques de matériau dérivé du bois.

14. Procédé selon l'une des revendications 1-12, **caractérisé par** l'ajout de résine de formaldéhyde recyclée à une résine de formaldéhyde non-précondensée pour l'utilisation en tant que liant pour la fabrication de plaques de matériau dérivé du bois, en particulier de plaques de MDF ou HDF.
